# EUROPÄISCHE PATENTSCHRIFT

(11) **EP 0 916 565 B1**
(45) Veröffentlichungstag und Bekanntmachung des Hinweises auf die Patenterteilung: **29.05.2002**
(21) Anmeldenummer: 98120618.8
(22) Anmeldetag: 02.11.1998
(51) Int. Cl.: B62D 1/19

(54) **Rohrförmiges oder stabförmiges Werkstück sowie Verfahren zu seiner Herstellung**
Pipe-shaped or rod-shaped article and method for its manufacture
Pièce en forme de tuyau ou de tige et procédé pour sa fabrication

(30) Priorität: 15.11.1997 DE 19750720
(43) Veröffentlichungstag der Anmeldung: 19.05.1999
(73) Patentinhaber: Volkswagen Aktiengesellschaft, 38436 Wolfsburg (DE)
(72) Erfinder: Abraham, Reiner, 38458 Velpke (DE); Schreiber, Werner, Dr., 38527 Meine (DE)

(56) Entgegenhaltungen:
- EP-A- 0 612 649
- DE-A- 2 721 571
- DE-A- 3 016 135
- DE-A- 4 302 726
- GB-A- 2 316 150

## Beschreibung

Die vorliegende Erfindung betrifft ein rohrförmiges oder stabförmiges Werkstück, das zumindest in einem Abschnitt zumindest teilweise mit einer Längsverzahnung versehen ist, die Zähne und zwischen diesen angeordnete, sich in Längsrichtung des Werkstücks erstreckende Rillen aufweist, wobei die Verzahnung entweder auf der Außenseite oder auf der Innenseite des Werkstücks angeordnet ist.

Stabförmige oder rohrförmige Werkstücke der vorgenannten Art sind bekannt und werden beispielsweise als ineinander in Längsrichtung verschiebbare Teile einer Lenkungsgelenkwelle eingesetzt, wobei jeweils ein rohrförmiges Werkstück mit einer auf seiner Innenseite angeordneten Längsverzahnung und ein zweites rohrförmiges oder stabförmiges Werkstück mit einer entsprechenden auf seiner Außenseite angeordneten Längsverzahnung zur Übertragung des Lenkdrehmoments versehen ist.

Ein Werkstück nach dem Oberbegriff der Ansprüche 1 und 6 geht aus EP 0 612 649 hervor.

Aus der DE 30 16 135 A1 ist eine Einrichtung bekannt, mit der Abschnitte eines rohrförmigen Werkstücks mit einer Längsverzahnung versehen werden können. Wenn mittels eines in der genannten deutschen Offenlegungsschrift beschriebenen Ziehrings mit innen angeordneter Profilierung eine Längsverzahnung auf der Außenseite eines Abschnitts des rohrförmigen Werkstücks gezogen wird, ergibt sich das Problem, daß mit zunehmender Entfernung vom Startpunkt des Ziehvorgangs in Längsrichtung des rohrförmigen Werkstücks dessen Außendurchmesser leicht ansteigt. Das hat seinen Grund darin, daß wegen der Duktilität des zu bearbeitenden Materials dieses durch den Ziehvorgang teilweise mit dem Ziehring mitgeführt wird. Dadurch ergibt sich letztlich an dem Ende des mit der Längsverzahnung versehenden Abschnitts, an dem der Ziehvorgang beendet wird, eine Aufwerfung des Materials des rohrförmigen Werkstücks. Eine Längsverzahnung kann z. B. bei metallischen Werkstücken aufgezogen werden, wobei das vorgenannte Problem bei Materialien mit höherer Duktilität wie beispielsweise Aluminium und Magnesium ausgeprägter auftritt, als beispielsweise bei Stahl.

Wenn die rohrförmigen oder stabförmigen Werkstücke der eingangs genannten Art beispielsweise als ineinander verschiebbare Teile einer Lenkungsgelenkwelle verwendet werden sollen, muß ihre Verschiebbarkeit in Längsrichtung ineinander einen Schiebewiderstand aufweisen, der nur sehr kleine Abweichungen von einem vorgegebenen Wert aufweisen darf. Dies hat seinen Grund darin, daß die Verschiebung der rohrförmigen oder stabförmigen Werkstücke ineinander üblicherweise nur im Falle eines Unfallcrashs erfolgen soll, dann aber zur kontrollierten Crashenergieabsorption ein definierter Verschiebewiderstand vorhanden sein muß. Ein Werkstück mit einer Längsverzahnung, das an einem Ende des mit der Verzahnung versehenen Abschnitts eine Aufwerfung des Materials des Werkstücks aufweist, ist für diesen Zweck denkbar ungeeignet, weil die Verzahnung durch diese Aufwerfung in ihrer Dimension unpräzise wird und der Verschiebewiderstand der ineinander längsverschiebbaren Werkstücke nicht mehr exakt vorausbestimmbar ist.

Das der vorliegenden Erfindung zugrunde liegende Problem ist die Schaffung eines Werkstücks der eingangs genannten Art, das zum Zwecke der kontrollierten Crashenergieabsorption präzise mit einem entsprechend mit einer radial entgegengesetzt gerichteten Längsverzahnung versehenen rohrförmigen oder stabförmigen anderen Werkstück zusammenwirken kann.

Dies wird erfindungsgemäß durch die kennzeichnenden Merkmale der Ansprüche 1 und 6 erreicht.

Bei einem erfindungsgemäßen rohrförmigen oder stabförmigen Werkstück, auf dessen Außenseite die Längsverzahnung angeordnet ist, umfaßt der mit der Verzahnung versehene Abschnitt mehrere Abschnitte größeren Außendurchmessers und mehrere Abschnitte kleineren Außendurchmessers, die abwechselnd zueinander in Längsrichtung des Werkstücks angeordnet sind. Vorzugsweise können diese Abschnitte größeren und kleineren Außendurchmessers der Außenseite des mit der Längsverzahnung versehenen Abschnitts eine wellenförmige Struktur verleihen.

Das erfindungsgemäße Verfahren zur Herstellung eines derartigen rohrförmigen oder stabförmigen Werkstücks umfaßt einen ersten Verfahrensschritt, in dem der mit der Verzahnung zu versehende Abschnitt so - z. B. durch Rundhämmern oder Drehen - bearbeitet wird, daß er Abschnitte größeren und kleineren Außendurchmessers aufweist, sowie einen zweiten Verfahrensschritt, in dem - z. B. mittels eines Ziehrings - die Längsverzahnung aufgezogen wird. Bei dem Aufziehen der Längsverzahnung kann auf Grund der auf die Abschnitte größeren Außendurchmessers folgenden Abschnitte kleineren Außendurchmessers das Material des Werkstücks jeweils nur am Ende der Abschnitte größeren Außendurchmessers in Ziehrichtung aufgeworfen werden. Da es sich bei den Abschnitten größeren Außendurchmessers im Vergleich zu dem gesamten mit der Verzahnung versehenen Abschnitt um vorzugsweise relativ kurze Abschnitte handelt, ist auch der Umfang der Aufwerfung wesentlich kleiner als bei einem unstrukturierten, mit einer Verzahnung zu versehenden Abschnitt und daher im allgemeinen nicht mehr störend.

Insbesondere bei einer regelmäßigen wellenförmigen Außenkontur des mit der Längsverzahnung versehenen Abschnitts ergeben sich mehrere in Längsrichtung des rohrförmigen oder stabförmigen Werkstücks hintereinander liegende Abschnitte größeren Außendurchmessers mit etwa gleich großen, aber jeweils nur sehr geringen Materialaufwerfungen, so daß beim Eingriff des so gestalteten rohrförmigen oder stabförmigen Werkstücks in ein Rohr, das auf seiner Innenseite mit einer Längsverzahnung ausgestattet ist, ein präzise vorherbestimmbarer Schiebewiderstand auftritt.

Bei einem rohrförmigen Werkstück, auf dessen Innenseite eine Längsverzahnung angeordnet ist, umfaßt der mit der Verzahnung versehene Abschnitt Abschnitte mit kleinerem und größerem Innendurchmesser, die abwechselnd zueinander in Längsrichtung des Werkstücks angeordnet sind. Vorteilhafterweise können die Abschnitte kleineren und größeren Innendurchmessers der Innenseite des mit der Längsverzahnung versehenen Abschnitts eine wellenförmige Kontur verleihen.

Das erfindungsgemäße Verfahren zur Herstellung eines derartigen rohrförmigen Werkstücks umfaßt einen ersten Verfahrensschritt, in dem der mit der Verzahnung zu versehende Abschnitt so bearbeitet wird, das er Abschnitte kleineren und größeren Innendurchmessers aufweist, sowie einen zweiten Verfahrensschritt, in dem - z.B. mittels eines Ziehdorns - die Längsverzahnung eingezogen wird. Analog zu dem bereits beschriebenen stabförmigen oder rohrförmigen Werkstück mit an der Außenseite angeordneter Verzahnung weist die an der Innenseite angeordnete Verzahnung des erfindungsgemäßen rohrförmigen Werkstücks in den Abschnitten kleineren Innendurchmessers Aufwerfungen auf, die wesentlich kleiner sind, als bei einer durch Einziehen hergestellten Längsverzahnung, die keine Abschnitte mit unterschiedlich großen Innendurchmessern umfaßt.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Seitenansicht eines erfindungsgemäßen Werkstücks ;
- Fig. 2: eine Schnittansicht gemäß den Pfeilen II - II in Fig. 1;
- Fig. 3: einen Längsschnitt durch eine weitere Ausführungsform eines erfindungsgemäßen Werkstücks;
- Fig. 4: eine Ansicht auf das in Fig. 3 abgebildete Ausführungsbeispiel eines erfindungsgemäßen Werkstücks gemäß dem Pfeil IV in Fig. 3.

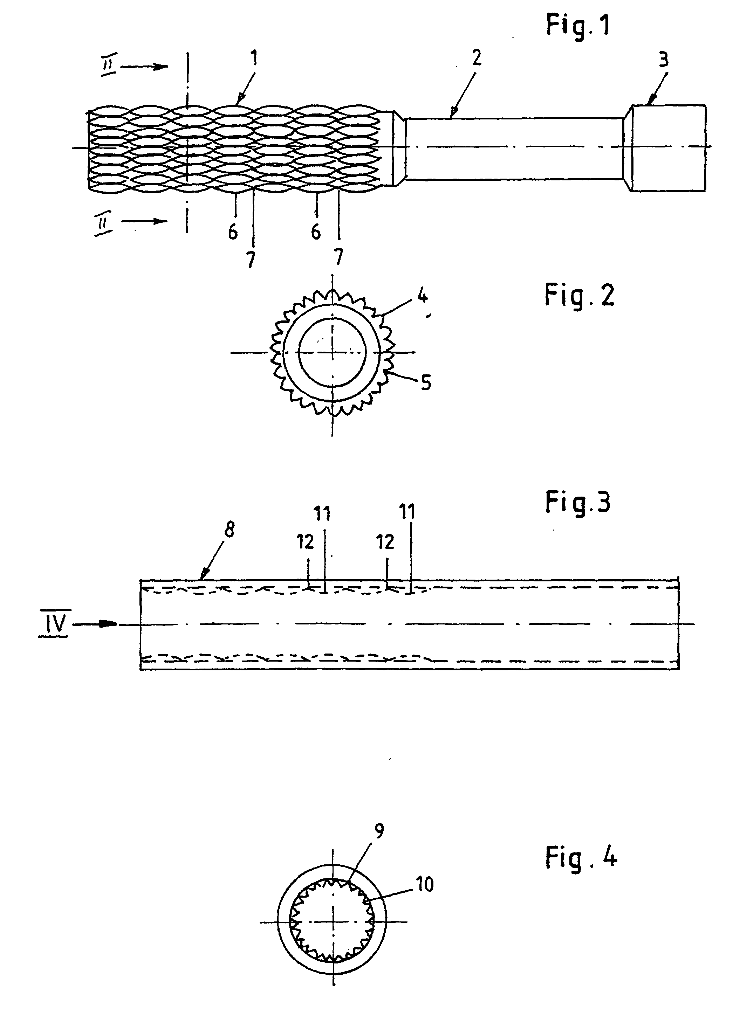

Das in Fig. 1 und Fig. 2 abgebildete erste Ausführungsbeispiel eines erfindungsgemäßen Werkstücks ist rohrförmig ausgestaltet mit einem mit einer Längsverzahnung versehenen Abschnitt 1, einem sich daran anschließenden Abschnitt 2 ohne Verzahnung mit einem geringeren Außendurchmesser und einem sich an diesen anschließenden Abschnitt 3 ohne Verzahnung, jedoch mit einem Außendurchmesser, der etwa dem des Abschnitts 1 entspricht. Ein derartiges rohrförmiges Werkstück kann beispielsweise als unteres Lenkstangenrohr verwendet werden, das in ein dieses umgreifendes oberes Lenkstangenrohr mit entsprechender, radial entgegengesetzt gerichteter Innenverzahnung hineinschiebbar sein soll. Um diese Funktion zu erfüllen, muß das erfindungsgemäße Werkstück nicht notwendig rohrförmig ausgeführt sein, sondern kann auch stabförmig gestaltet sein.

Bei dem abgebildeten Ausführungsbeispiel weist der mit der Verzahnung versehene Abschnitt 1 Zähne 4 und sich zwischen diesen in Längsrichtung des rohrförmigen Werkstücks erstreckende Rillen 5 auf (siehe dazu Fig. 2). Zusätzlich dazu ist der mit der Verzahnung versehene Abschnitt 1 in Längsrichtung des rohrförmigen Werkstücks mit einer wellenförmigen Außenkontur versehen. Die Außenkontur ist so gestaltet, daß sich jeweils an einen Abschnitt 6 mit einem Außendurchmesser, der etwa dem des Abschnitts 3 entspricht, ein Abschnitt 7 mit einem kleineren Außendurchmesser anschließt. Bei dem abgebildeten Ausführungsbeispiel sind die Abstände der Abschnitte 6 mit größerem Außendurchmesser zueinander über die gesamte Länge des mit der Verzahnung versehenen Abschnitts 1 gleichbleibend. Weiterhin ist jeweils zwischen zwei Abschnitten 6 mit vergleichsweise größerem Außendurchmesser ein Abschnitt 7 mit vergleichsweise kleinerem Außendurchmesser angeordnet, deren Abstände zueinander ebenfalls über die gesamte Länge des mit der Verzahnung versehenen Abschnitts 1 gleichbleiben.

Die Herstellung des erfindungsgemäßen Werkstücks kann derart erfolgen, daß in einem ersten Verfahrensschritt - z. B. durch Rundhämmern oder Drehen - eine rohrförmige oder stabförmige Vorform mit einer wellenförmigen Außenkontur versehen wird. Daran anschließend wird mit bekannten Verfahren eine Längsverzahnung auf den mit der wellenförmigen Außenkontur versehenden Abschnitt aufgezogen, beispielsweise durch eine mit entsprechenden nach innen weisenden Riefen versehene Ziehhülse.

Das in den Fig. 3 und 4 abgebildete zweite Ausführungsbeispiel zeigt ein rohrförmiges Werkstück mit einem Abschnitt 8, der eine Längsverzahnung auf seiner Innenseite aufweist. Wie aus Fig. 4 ersichtlich ist, besteht die Längsverzahnung aus nach innen gerichteten Zähnen 10 und zwischen diesen in Längsrichtung des rohrförmigen Werkstücks verlaufenden Rillen 9. Der mit der Längsverzahnung versehene Abschnitt 8 weist eine wellenförmige Innenkontur auf, wobei sich in dem in Fig. 3 und Fig. 4 abgebildeten Ausführungsbeispiel Abschnitte 11 mit kleinerem Innendurchmesser an Abschnitte 12 mit größerem Innendurchmesser anschließen. Wiederum sind die Abschnitte 11, 12 periodisch angeordnet, so daß jeweils auf einen Abschnitt 11 mit kleinerem Innendurchmesser ein Abschnitt 12 mit größerem Innendurchmesser folgt. Weiterhin sind die Abstände der Abschnitte 11 zueinander sowie die Abstände der Abschnitte 12 zueinander jeweils über die gesamte Länge des mit der Verzahnung versehenen Abschnitts 8 gleichbleibend.

Es sind jedoch sowohl bei einem rohrförmigen oder stabförmigen Werkstück mit äußerer Längsverzahnung als auch bei einem rohrförmigen Werkstück mit innerer Längsverzahnung mit einer Verzahnung versehene Abschnitte denkbar, in denen die Abstände der einzelnen darin vorgesehenen Abschnitte mit größerem oder kleinerem Außen- bzw. Innendurchmesser zueinander nicht über die gesamte Länge des mit der Verzahnung versehenen Abschnitts gleichbleiben.

Das in Fig. 3 und in Fig. 4 abgebildete zweite Ausführungsbeispiel eines rohrförmigen Werkstücks mit innerer Längsverzahnung kann dadurch hergestellt werden, daß in einem ersten Verfahrensschritt eine Vorform hergestellt wird, die einen Abschnitt 8 aufweist, in dem die Innenkontur beispielsweise wellenförmig gestaltet ist. Daran anschließend kann durch bekannte Ziehtechniken die Verzahnung beispielsweise durch einen mit nach außen weisenden Riefen versehenen Ziehdom eingeformt werden.

## Patentansprüche

1. Rohrförmiges oder stabförmiges Werkstück, das zumindest in einem Abschnitt (1) zumindest teilweise mit einer Längsverzahnung versehen ist, die Zähne (4) und zwischen diesen angeordnete, sich in Längsrichtung des Werkstücks erstreckende Rillen (5) aufweist, wobei die Verzahnung auf der Außenseite des Werkstücks angeordnet ist **dadurch gekennzeichnet, daß** der mit der Verzahnung versehene Abschnitt (1) mehrere Abschnitte (6, 7) größeren Außendurchmessers und mehrere Abschnitte kleineren Außendurchmessers umfaßt, die abwechselnd zueinander in Längsrichtung des Werkstücks angeordnet sind.

2. Werkstück nach Anspruch 1, **dadurch gekennzeichnet, daß** die Abschnitte (6) größeren Außendurchmessers in Längsrichtung des Werkstücks jeweils gleich lang sind.

3. Werkstück nach einem der Ansprüche 1 oder 2, **dadurch gekennzeichnet, daß** die Abstände der Abschnitte (6) größeren Außendurchmessers zueinander in Längsrichtung des Werkstücks gleich groß sind.

4. Werkstück nach einem der Ansprüche 1 bis 3, **dadurch gekennzeichnet, daß** die Abschnitte (7) kleineren Außendurchmessers in Längsrichtung des Werkstücks jeweils gleich lang sind.

5. Werkstück nach einem der Ansprüche 1 bis 4, **dadurch gekennzeichnet, daß** die Abschnitte (6, 7) größeren und kleineren Außendurchmessers der Außenseite des mit der Längsverzahnung versehenen Abschnittes (1) eine wellenförmige Kontur verleihen.

6. Rohrförmiges Werkstück, das zumindest in einem Abschnitt (8) zumindest teilweise mit einer Längsverzahnung versehen ist, die Zähne (10) und zwischen diesen angeordnete, sich in Längsrichtung des Werkstücks erstreckende Rillen (9) aufweist, wobei die Verzahnung auf der Innenseite des Werkstücks angeordnet ist, **dadurch gekennzeichnet, daß** der mit der Verzahnung versehene Abschnitt (8) mehrere Abschnitte (11, 12) kleineren Innendurchmessers und mehrere Abschnitte größeren Innendurchmessers umfaßt, die abwechselnd zueinander in Längsrichtung des Werkstücks angeordnet sind.

7. Werkstück nach Anspruch 6, **dadurch gekennzeichnet, daß** die Abschnitte (11) kleineren Innendurchmessers in Längsrichtung des Werkstücks jeweils gleich lang sind.

8. Werkstück nach einem der Ansprüche 6 oder 7, **dadurch gekennzeichnet, daß** die Abstände der Abschnitte (11) kleineren Innendurchmessers zueinander in Längsrichtung des Werkstücks gleich groß sind.

9. Werkstück nach einem der Ansprüche 6 bis 8, **dadurch gekennzeichnet, daß** die Abstände der Abschnitte (12) größeren Innendurchmessers zueinander in Längsrichtung des Werkstücks gleich groß sind.

10. Werkstück nach einem der Ansprüche 6 bis 9, **dadurch gekennzeichnet, daß** die Abschnitte (11, 12) kleineren und größeren Innendurchmessers der Innenseite des mit der Längsverzahnung versehenen Abschnitts (8) eine wellenförmige Kontur verleiht.

11. Verfahren zur Herstellung eines rohrförmigen oder stabförmigen Werkstücks nach einem der Ansprüche 1 bis 5, **dadurch gekennzeichnet, daß** in einem ersten Verfahrensschritt. der mit der Längsverzahnung zu versehende Abschnitt (1) so bearbeitet wird, daß er Abschnitte (6, 7) größeren und kleineren Außendurchmessers aufweist, und daß in einem zweiten Verfahrensschritt die Längsverzahnung aufgezogen wird.

12. Verfahren zur Herstellung eines rohrförmigen Werkstücks nach einem der Ansprüche 6 bis 10, **dadurch gekennzeichnet, daß** in einem ersten Verfahrensschritt der mit der Verzahnung zu versehende Abschnitt (8) so bearbeitet wird, daß er Abschnitte (11, 12) kleineren und größeren Innendurchmessers aufweist, und daß in einem zweiten Verfahrensschritt die Längsverzahnung eingezogen wird.

## Claims

1. Tubular or bar-shaped workpiece which at least in one portion (1) is provided at least partially with a longitudinal toothing which has teeth (4) and grooves (5) arranged between these and extending in the longitudinal direction of the workpiece, the toothing being arranged on the outside of the workpiece, **characterized in that** the portion (1) provided with the toothing comprises a plurality of portions (6, 7) of larger outside diameter and a plurality of portions of smaller outside diameter which are arranged alternately to one another in the longitudinal direction of the workpiece.

2. Workpiece according to Claim 1, **characterized in that** the portions (6) of large diameter are each of equal length in the longitudinal direction of the workpiece.

3. Workpiece according to one of Claims 1 and 2, **characterized in that** the distances between the portions (6) of larger outside diameter are of equal size in the longitudinal direction of the workpiece.

4. Workpiece according to one of Claims 1 to 3, **characterized in that** the portions (7) of smaller outside diameter are each of equal length in the longitudinal direction of the workpiece.

5. Workpiece according to one of Claims 1 to 4, **characterized in that** the portions (6, 7) of larger and smaller outside diameter impart a wavy contour to the outside of the portion (1) provided with the longitudinal toothing.

6. Tubular workpiece which at least in one portion (8) is provided at least partially with a longitudinal toothing which has teeth (10) and grooves (9) arranged between these and extending in the longitudinal direction of the workpiece, the toothing being arranged on the inside of the workpiece, **characterized in that** the portion (8) provided with the toothing comprises a plurality of portions (11, 12) of smaller inside diameter and a plurality of portions of larger inside diameter which are arranged alternately to one another in the longitudinal direction of the workpiece.

7. Workpiece according to Claim 6, **characterized in that** the portions (11) of the smaller inside diameter are each of equal length in the longitudinal direction of the workpiece.

8. Workpiece according to one of Claims 6 and 7, **characterized in that** the distances between the portions (11) of smaller inside diameter are of equal size in the longitudinal direction of the workpiece.

9. Workpiece according to one of Claims 6 to 8, **characterized in that** the distances between the portions (12) of larger inside diameter are of equal size in the longitudinal direction of the workpiece.

10. Workpiece according to one of Claims 6 to 9, **characterized in that** the portions (11, 12) of smaller and larger inside diameter impart a wavy contour to the inside of the portion (8) provided with the longitudinal toothing.

11. Method for producing a tubular or bar-shaped workpiece according to one of Claims 1 to 5, **characterized in that**, in a first method step, the portion (1) to be provided with longitudinal toothing is machined in such a way that it has portions (6, 7) of larger and smaller outside diameter, and **in that**, in a second method step, the longitudinal toothing is drawn on.

12. Method for producing a tubular workpiece according to one of Claims 6 to 10, **characterized in that**, in a first method step, the portion (8) to be provided with the toothing is machined in such a way that it has portions (11, 12) of smaller and larger inside diameter, and **in that**, in a second method step, the longitudinal toothing is drawn in.

## Revendications

1. Pièce en forme de tuyau ou de tige, qui est pourvue, au moins dans une portion (1), au moins en partie d'une denture longitudinale, qui présente des dents (4) et des sillons (5) disposés entre celles-ci et s'étendant dans le sens longitudinal de la pièce, dans laquelle la denture est disposée sur la face extérieure de la pièce, **caractérisée en ce que** la portion (1) pourvue de la denture comprend plusieurs portions (6, 7) de plus grand diamètre extérieur et plusieurs portions de plus petit diamètre extérieur, qui sont disposées en alternance l'une par rapport à l'autre dans le sens longitudinal de la pièce.

2. Pièce suivant la revendication 1, **caractérisée en ce que** les portions (6) de plus grand diamètre extérieur sont chaque fois de même longueur dans le sens longitudinal de la pièce.

3. Pièce suivant l'une quelconque des revendications 1 ou 2, **caractérisée en ce que** les distances des portions (6) de plus grand diamètre extérieur l'une par rapport à l'autre dans le sens longitudinal de la pièce sont de même longueur.

4. Pièce suivant l'une quelconque des revendications 1 à 3, **caractérisée en ce que** les portions (7) de plus petit diamètre extérieur sont chaque fois de même longueur dans le sens longitudinal de la pièce.

5. Pièce suivant l'une quelconque des revendications 1 à 4, **caractérisée en ce que** les portions (6, 7) de plus grand et de plus petit diamètre extérieur confèrent à la face extérieure de la portion (1) pourvue de la denture longitudinale un contour de forme ondulée.

6. Pièce en forme de tuyau, qui est pourvue, au moins dans une portion (8), au moins en partie d'une denture longitudinale, qui présente des dents (10) et des sillons (9) disposés entre celles-ci et s'étendant dans le sens longitudinal de la pièce, dans laquelle la denture est disposée sur la face intérieure de la pièce, **caractérisée en ce que** la portion (8) pourvue de la denture comprend plusieurs portions (11, 12) de plus petit diamètre intérieur et plusieurs portions de plus grand diamètre intérieur, qui sont disposées en alternance l'une par rapport à l'autre dans le sens longitudinal de la pièce.

7. Pièce suivant la revendication 6, **caractérisée en ce que** les portions (11) de plus petit diamètre intérieur sont chaque fois de même longueur dans le sens longitudinal de la pièce.

8. Pièce suivant l'une quelconque des revendications 6 ou 7, **caractérisée en ce que** les distances des portions (11) de plus petit diamètre intérieur l'une par rapport à l'autre dans le sens longitudinal de la pièce sont de même longueur.

9. Pièce suivant l'une quelconque des revendications 6 à 8, **caractérisée en ce que** les distances des portions (12) de plus grand diamètre intérieur l'une par rapport à l'autre dans le sens longitudinal de la pièce sont de même longueur.

10. Pièce suivant l'une quelconque des revendications 6 à 9, **caractérisée en ce que** les portions (11, 12) de plus petit et de plus grand diamètre intérieur confèrent à la face intérieure de la portion (8) pourvue de la denture longitudinale un contour de forme ondulée.

11. Procédé pour la fabrication d'une pièce en forme de tuyau ou de tige suivant l'une quelconque des revendications 1 à 5, **caractérisé en ce que**, dans une première étape du procédé, la portion (1) à doter de la denture longitudinale est usinée de façon telle qu'elle présente des portions (6, 7) de plus grand et de plus petit diamètre extérieur, et **en ce que**, dans une seconde étape du procédé, la denture longitudinale est formée extérieurement.

12. Procédé pour la fabrication d'une pièce en forme de tuyau suivant l'une quelconque des revendications 6 à 10, **caractérisé en ce que**, dans une première étape du procédé, la portion (8) à doter de la denture longitudinale est usinée de façon telle qu'elle présente des portions (11, 12) de plus petit et de plus grand diamètre intérieur, et **en ce que**, dans une seconde étape du procédé, la denture longitudinale est formée intérieurement.
